# EUROPÄISCHE PATENTSCHRIFT

(11) **EP 4 469 378 B1**
(45) Veröffentlichungstag und Bekanntmachung des Hinweises auf die Patenterteilung: **14.01.2026**
(21) Anmeldenummer: 23702417.9
(22) Anmeldetag: 26.01.2023
(51) Int. Cl.: B65H 19/22, B65H 18/28, B65H 19/28

(54) **VERFAHREN ZUM AUFWICKELN EINER FOLIE AUF EINE WICKELHÜLSE UND EIN COIL**
METHOD FOR WINDING A FOIL ONTO A WINDING CORE, AND COIL
PROCÉDÉ D'ENROULEMENT D'UNE FEUILLE SUR UN NOYAU D'ENROULEMENT ET BOBINE

(30) Priorität: 27.01.2022 DE 102022101890
(43) Veröffentlichungstag der Anmeldung: 04.12.2024
(73) Patentinhaber: PowerCo SE, 38239 Salzgitter (DE)
(72) Erfinder: JANSEN, Tobias, 38106 Braunschweig (DE); LIPPKY, Kristian, 38106 Braunschweig (DE)
(74) Vertreter: karo IP
(86) Internationale Anmeldenummer: PCT/EP2023/051852
(87) Internationale Veröffentlichungsnummer: WO 2023/144236

(56) Entgegenhaltungen:
- EP-A1- 1 336 582
- WO-A1-97/17736
- DE-A1- 10 119 460
- US-A1- 2007 152 515

## Beschreibung

Die Erfindung betrifft ein Verfahren zum Aufwickeln einer Folie auf eine Wickelhülse und ein Coil, umfassend eine Wickelhülse und eine auf die Wickelhülse aufgewickelte Folie. Das Verfahren und das Coil bzw. die Wickelhülse dienen insbesondere zum Abwickeln und Aufwickeln von Elektrodenfolien, insbesondere von beschichteten und/ oder unbeschichteten Elektrodenfolien.

Für den Antrieb von Kraftfahrzeugen werden vermehrt Batterien, insbesondere Lithium-Ionen-Batterien eingesetzt. Batterien werden üblicherweise aus Batteriezellen zusammengesetzt, wobei jede Batteriezelle einen Stapel von Anoden-, Kathoden- und Separatorfolien aufweist, die ggf. in Form von Lagen bzw. Materialschichten vorliegen. Zumindest ein Teil der Anoden- und Kathodenfolien sind als elektrische Strom-Ableiter ausgeführt, zur Ableitung des von der Batteriezelle bereitgestellten Stroms hin zu einem außerhalb der Batteriezelle angeordneten Verbraucher. Die einzelnen Elemente eines Stapels werden im Folgenden auch als Elektroden bzw. Folien bezeichnet.

Die einzelnen Folien werden insbesondere als Endlosmaterial bereitgestellt, ggf. beschichtet, z. B. mit einem Aktivmaterial, und wieder aufgewickelt. Die so hergestellten Folien werden dann als aufgewickeltes Coil einem Prozess zur Herstellung von Batteriezellen zugeführt. Dort werden die Coils, umfassend ggf. beschichtete Elektrodenfolien, abgewickelt und z. B. beschnitten bzw. in einzelne Lagen aufgetrennt bzw. zerteilt, so dass die einzelnen Lagen aufeinander gestapelt angeordnet werden können. Unbeschichtete Bereiche von beschichteten Folien können als Ableiter eingesetzt werden.

Die Coils umfassen insbesondere eine sogenannten Wickelhülse, auf der die Folien aufgewickelt sind und von der die Folien später wieder abgewickelt werden.

Im Anbetracht der fortschreitenden Automatisierung von Produktionsketten in Fabriken zur Herstellung von (Lithium-lonen-)Batteriezellen ist es zwingend erforderlich, die Verkettung zwischen den einzelnen Maschinen zu verbessern. Eine solche Produktionskette umfasst insbesondere den Prozess Beschichten (also insbesondere das Beschichten eines Trägermaterials mit einem Aktivmaterial) und das Stacking (das Stapeln der vereinzelten Lagen von Folien). Diese Prozesse umfassen insbesondere eine Vielzahl von Splicing- (also Verbindungsverfahren zum Verbinden von Elektrodenfolien zu einem Endlosmaterial) und Schneidoperationen (zum Beschneiden oder zum Trennen von einzelnen Lagen von Elektrodenfolien von einem Endlosmaterial). Insbesondere sollen diese Prozesse bzw. Verfahren einen kontinuierliches Herstellungsverfahren ermöglichen.

Ein Splice-Verbindungsverfahren wird insbesondere beim Abwickeln eines Endlosmaterials von einem Coil eingesetzt. Ist eine erste Folie vollständig von dem Coil abgerollt wird an das Ende der ersten Folie eine neue zweite Folie eines bereits in der Maschine zur Verfügung stehenden neuen Coils automatisiert angefügt. Diese Verbindung zwischen der ersten Folie und der zweiten Folie wird als Splice-Stelle bzw. als Fügestelle bezeichnet. Im Anschluss oder zuvor muss das Ende der ersten Folie vom Coil bzw. von der Wickelhülse getrennt werden, um die leere Wickelhülse von dem Prozess zu entkoppeln und aus der Maschine zu entfernen. Die leere Wickelhülse kann dann durch ein neues Coil ersetzt werden.

Insbesondere wird das Endlosmaterial der ersten Folie nach dem Durchlaufen des Prozesses, z. B. dem Beschichten der ersten Folie, wieder auf eine (andere) Wickelhülse aufgewickelt. Nach dem Durchlaufen der Splice-Stelle durch den Prozess (also z. B. dem Beschichten der Folie) muss die erste Folie von der zweiten Folie, insbesondere hinter der Splice-Stelle, (an einer Trennstelle) wieder getrennt werden, so dass das die erste Folie umfassende Coil aus der Maschine entnehmbar ist. Im Anschluss an diese Trennstelle wird das Ende der zweiten Folie wieder an eine neue bzw. leere Wickelhülse gefügt, so dass eine fehlerfreie Aufwicklung gewährleistet werden kann.

Das Trennen des Endlosmaterials, also das Erzeugen der Trennstelle, wird industriell insbesondere durch einen Messerschnitt oder einen Rollmesserschnitt durchgeführt und ist durch eine komplexe Automatisierungstechnologie geprägt.

Das Verbinden des Folienmaterials mit der Wickelhülse wird industriell insbesondere als Klebeprozess durchgeführt und ist ebenfalls durch eine aufwändige Automatisierung geprägt. Hierbei liegen die Herausforderungen insbesondere in der Applikation der Klebebänder auf die Folie bzw. auf die Wickelhülse.

Die wesentlichen Nachteile bei diesen Prozessen, also bei dem Erzeugen der Trennstelle und bei dem Verbinden der Folie mit der Wickelhülse, sind, dass diese beiden komplexen Prozesse grundsätzlich bei einem vollautomatisierten Wechsel der Coils eingesetzt werden und somit prinzipiell Fehlerquellen darstellen, die die Verfügbarkeit der Maschinen stark reduzieren können. Des Weiteren führt der Trenn- bzw. Schneidprozess zu einer zusätzlichen Ausbildung von Ablationsprodukten, die zu einer Kontamination der Elektrodenoberflächen und somit zu einer Beeinträchtigung des Verbunds umfassend die Elektrodenfolien und Separatormaterial führen kann.

Der eingebrachte Klebestreifen zur Fixierung bzw. Verbindung der Folie auf der Wickelhülse kann zu einer inhomogenen Belastung der Folie führen. Des Weiteren müssen diese Klebestellen gereinigt werden, wenn die Wickelhülsen erneut eingesetzt werden sollen.

Aus der CN 108461825 A ist eine Vorrichtung zum Aufbringen eines Klebstoffs auf Elektrodenfolien bekannt.

Aus der CN 109411831 A ist eine Vorrichtung zum Aufbringen von Klebestreifen auf Elektrodenfolien bekannt. Dabei wird eine Vakuumhülse zum Fixieren der Klebestreifen beschrieben.

Aus der CN 212434693 U ist eine Vorrichtung zum Bereitstellen einer Klebefolie bekannt, die für die Herstellung von Elektrodenfolien eingesetzt wird. Ein weiteres Verfahren bzw. ein Coil nach dem Stand der Technik sind bekannt aus z. B. WO 97/17736 A1.

Aufgabe der vorliegenden Erfindung ist es, die mit Bezug auf den Stand der Technik angeführten Probleme zumindest teilweise zu lösen. Insbesondere sollen die Prozesse Trennen des Endlosmaterials und Verbinden des Endlosmaterials mit einer Wickelhülse verbessert werden, also insbesondere durch eine schlankere, einfachere und robustere Technologie ersetzt werden, so dass ein hoher Grad an Automatisierung der Produktionskette gewährleistet werden kann.

Zur Lösung dieser Aufgaben tragen ein Verfahren gemäß den Merkmalen des unabhängigen Patentanspruchs 1 und ein Coil gemäß den Merkmalen des unabhängigen Patentanspruchs 8 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zum Aufwickeln einer Folie auf eine Wickelhülse zur Ausbildung eines Coils und/ oder zum Abwickeln der Folie von der Wickelhülse vorgeschlagen. Die Folie umfasst insbesondere ein Trägermaterial einer Elektrodenfolie, eine zumindest ein Aktivmaterial aufweisende Elektrodenfolie oder eine Separatorfolie, die jeweils als Bestandteil einer Batteriezelle verwendet werden. Das Verfahren umfasst beim Aufwickeln zumindest die folgenden Schritte:
a) Bereitstellen der Wickelhülse und Anordnen der Wickelhülse auf einer Welle;
b) Bereitstellen der Folie als Endlosmaterial, wobei die Folie ein erstes Ende aufweist;
c) Anordnen des ersten Endes auf der Wickelhülse;
d) Aufwickeln der Folie auf der Wickelhülse und Ausbilden des Coils.

Die Wickelhülse weist eine perforierte Umfangsfläche mit mindestens einer Öffnung auf. Auf der perforierten Umfangsfläche wird die Folie in den Schritten c) und d) angeordnet. Die Wickelhülse ist an eine Unterdruckquelle angeschlossen, über die an der mindestens einen Öffnung ein Unterdruck erzeugt wird, so dass durch den Unterdruck die Folie an der Umfangsfläche zumindest während Schritt c), insbesondere auch während Schritt d), fixiert wird.

Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Ganz besonders bevorzugt finden die Schritte a) und b) vor den Schritten c) und d) statt. Insbesondere finden die Schritte a) und b) zeitlich parallel zueinander statt. Insbesondere findet Schritt c) vor Schritt d) statt. Insbesondere werden die Schritte a) bis d) in der angegebenen Reihenfolge durchgeführt.

Eine Batteriezelle umfasst insbesondere ein, ein Volumen umschließendes Gehäuse und in dem Volumen angeordnet mindestens eine Elektrodenfolie einer ersten Elektrodenart (z. B. eine Anode), eine Elektrodenfolie einer zweiten Elektrodenart (z. B. eine Kathode) und ein dazwischen angeordnetes Separatormaterial sowie einen Elektrolyten, z. B. einen flüssigen oder einen festen Elektrolyten.

Die Batteriezelle ist insbesondere eine Pouchzelle (mit einem verformbaren Gehäuse bestehend aus einer Pouchfolie) oder eine prismatische Zelle (mit einem formfesten Gehäuse).

Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Die Batteriezelle ist insbesondere eine Lithium-Ionen-Batteriezelle oder aber eine andere Art von Batteriezelle.

Die einzelnen Folien der Mehrzahl von Elektrodenfolien sind aufeinander angeordnet und bilden insbesondere einen Stapel. Die Elektrodenfolien sind jeweils unterschiedlichen Elektrodenarten zugeordnet, sind also als eine Anode oder eine Kathode ausgeführt. Dabei sind Anoden und Kathoden wechselweise und jeweils durch das Separatormaterial getrennt voneinander angeordnet.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Das Verfahren ist insbesondere auf das Aufwickeln und Abwickeln einer Folie gerichtet, wobei die auf der Wickelhülse aufgewickelte Folie zusammen mit der Wickelhülse als Coil bezeichnet wird.

Die Wickelhülse weist eine perforierte Umfangsfläche mit mindestens einer Öffnung auf. Die Umfangsfläche ist insbesondere zylindrisch bzw. hohlzylindrisch ausgeführt. Die Wickelhülse ist insbesondere zur Anordnung auf einer Welle geeignet ausgeführt, weist also zur Verbindung mit der Welle geeignete Anschlussmaße bzw. Anschlussgeometrien auf. Die Welle dient insbesondere der Anordnung und/ oder (ggf. zusätzlich) dem Antrieb, also der Drehung der Wickelhülse, so dass z. B. durch die Drehung der Welle die Wickelhülse in Drehung versetzt wird. Infolge der Anordnung auf der Welle kann die Folie auf die Wickelhülse aufgewickelt oder von der Wickelhülse abgewickelt werden.

Die Welle ist insbesondere Bestandteil einer Vorrichtung, die zumindest die Unterdruckquelle aufweist. Die Unterdruckquelle kann z. B. über eine geeignete Verbindung mit der Welle und/ oder mit der Wickelhülse verbunden werden, so dass an der mindestens einen Öffnung ein von der Unterdruckquelle erzeugter bzw. bereitgestellter Unterdruck (ein Unterdruck gegenüber der Umgebung der Vorrichtung) vorliegt. Die Verbindung kann z. B. über eine Drehkopplung erfolgen, so dass die feststehende Unterdruckquelle mit der drehenden Welle und/ oder der drehenden Wickelhülse verbunden werden kann.

Die Welle kann z. B. ebenfalls als Hülse mit perforierter Oberfläche ausgeführt sein, wobei diese Perforation insbesondere nur der Übertragung des Unterdrucks von der Unterdruckquelle hin zur Umfangsfläche dient. Alternativ kann die Welle auch mit geschlossener Umfangsfläche ausgeführt sein. Die Wickelhülse kann z. B. einen stirnseitigen Anschluss für die Unterdruckquelle aufweisen, wobei die Umfangsfläche von der Welle beabstandet angeordnet ist, so dass über den (zylindrischen) Spalt zwischen Umfangsfläche und Welle der Unterdruck der Unterdruckquelle an der mindestens einen Öffnung bereitgestellt werden kann.

Der Unterdruck dient insbesondere dazu, die Folie an der Umfangsfläche zu fixieren. Fixieren heißt insbesondere, dass eine Andruckkraft bzw. Ansaugkraft bereitgestellt wird, durch die die Folie an die Umfangsfläche angepresst bzw. angesaugt wird.

Die Folie umfasst insbesondere ein Trägermaterial einer Elektrodenfolie, eine zumindest ein Aktivmaterial aufweisende Elektrodenfolie oder eine Separatorfolie, die jeweils als Bestandteil einer Batteriezelle verwendet werden. Das Trägermaterial umfasst insbesondere ein metallisches Material, z. B. ein Kupfer oder Aluminium umfassendes Material bzw. Legierung.

Die Folie umfasst insbesondere keine klebenden Bestandteile, durch die die Folie an der Umfangsfläche der Wickelhülse anhaften könnte.

Gemäß Schritt a) erfolgt insbesondere ein Bereitstellen der Wickelhülse und ein Anordnen der Wickelhülse auf einer Welle. Die Wickelhülse kann z. B. auf die Welle aufgeschoben werden.

Gemäß Schritt b) erfolgt insbesondere ein Bereitstellen der Folie als Endlosmaterial, wobei die Folie ein erstes Ende aufweist. Das erste Ende wird an der Umfangsfläche angeordnet, dort über den Unterdruck fixiert und dann die Folie aufgewickelt. Insbesondere erstreckt sich die Folie über mindestens eine Umdrehung der Wickelhülse, insbesondere über mehrere Lagen der Folie, bis hin zu einem zweiten Ende der Folie. Das zweite Ende kann z. B. durch eine Trennstelle gebildet werden.

Gemäß Schritt c) erfolgt insbesondere ein Anordnen des ersten Endes auf der Wickelhülse. Das Anordnen kann z. B. durch eine Zuführung erfolgen, durch die Folie hin zur Wickelhülse geleitet wird. Dabei legt sich die Folie über das erste Ende an der Umfangfläche an und wird über die mindestens eine Öffnung an der Umfangsfläche angesaugt. Während des Anordnens kann die Wickelhülse still stehen oder sich drehen. Die Folie kann an der Umfangsfläche angelegt werden oder kontinuierlich hin zur Wickelhülse zugeführt werden. Das Anordnen umfasst insbesondere auch das Aufwickeln der Folie, zumindest so weit, dass die Folie entlang der Umfangsrichtung über einen Winkelbereich von null bis 360, insbesondere von mindestens 15 Winkelgrad und höchstens 345 Winkelgrad an der Umfangsfläche anliegt.

Insbesondere liegt während Schritt c), zumindest teilweise/ ggf. vollzeitig während Schritt c), der Unterdruck an der Öffnung an, so dass die Folie über den Unterdruck an der Umfangfläche zum Anliegen gebracht und insbesondere dort fixiert wird.

Gemäß Schritt d) erfolgt insbesondere ein Aufwickeln der Folie auf der Wickelhülse und Ausbilden des Coils. Das Aufwickeln umfasst insbesondere das Aufwickeln der Folie so weit, dass die Folie entlang der Umfangsrichtung über einen Winkelbereich von mehr als null, insbesondere von mehr als 15 Winkelgrad, bevorzugt von mehr als 345 oder sogar von 360 Winkelgrad an der Umfangsfläche anliegt.

Insbesondere kann der Unterdruck, wenn zumindest die Folie mit mindestens einer Lage auf der Wickelhülse angeordnet ist und sich somit über die einander entlang der Umfangsrichtung überlappenden Lagen selbst auf der Umfangsfläche fixiert, auch während Schritt d) wieder abgeschaltet werden.

Insbesondere ist auf der Umfangsfläche der Wickelhülse während der Schritte c) und d) kein klebendes Material angeordnet, so dass die Folie allein aufgrund des Unterdrucks an der Umfangsfläche anhaftet.

Mit dem Verfahren kann der Einsatz von Klebematerialien, z. B. von Klebebändern, die zur Fixierung der Folie an einer Wickelhülse bisher eingesetzt wurden, vermieden werden. Entsprechend ist auch kein Trennen der Folie notwendig, so dass dieser Verfahrensschritt und das damit verbundene Risiko der Verunreinigung der verwendeten Vorrichtungen bzw. des Werkstücks, z. B. durch Ablation, vermieden werden kann. Damit kann insbesondere ein vollautomatisiertes Aufwickeln der Folie realisiert werden, wobei sonst als erforderlich angesehene Verfahrensschritte wie Trennen bzw. Schneiden sowie Festkleben der Folie auf der Wickelhülse entfallen können.

Es entfällt also der sonst erforderliche Beschnitt der Folie, also das Trennen der Folie von dem auf der Umfangsfläche angeordneten ersten Ende, so dass ein Materialverlust vermieden werden kann.

Weiter kann eine Verunreinigung der Wickelhülse durch ein Klebematerial vermieden werden. Sonst erforderliche Reinigungsschritte der Wickelhülse sind nun nicht mehr erforderlich.

Mit dem Bereitstellen eines Unterdrucks kann insbesondere eine, ggf. an das verwendete Material der Folie angepasste, reproduzierbare Ansaugkraft erzeugt werden. Bei den bisher verwendeten Klebematerialien konnte die Adhäsion zur Folie nur schwer reproduziert werden.

Zudem wird das Wechseln der Wickelhülsen und insgesamt das Auf- und Abwickeln der Folie vereinfacht, da
- kein Beschnitt der Folie erfolgen muss,
- kein Kleben zum Beginn des Wickelprozesses erfolgt,
- keine Klebstoffrückstände auf der Wickelhülse vorliegen bzw. von dieser entfernt werden müssen,
- keine Beeinflussung der ersten Wicklungen (also der inneren Lagen der Folie des gebildeten Coils) durch eine Aufdickung im Bereich des auf der Wickelhülse angeordneten Klebebands erfolgt,
- Reinigungsprozesse der Wickelhülse entfallen,
- Materialeinsparungen insbesondere bei teurem Aktivmaterial realisiert werden können,
- durch den Wegfall der Schneid- und Klebeprozesse Material in einem hohen Maß eingespart werden kann, da der Verschnitt reduziert wird, und/ oder
- Schneidsysteme zum Trennen der Folie nicht eingesetzt werden müssen, wobei damit auch ein Verschleiß der Schneidsysteme vermieden werden kann und ein Einsparen von Verbrauchsmaterial erfolgt.

Die Wickelhülse weist insbesondere eine sich entlang einer axialen Richtung erstreckende Drehachse auf.

Insbesondere umfasst die Umfangsfläche eine Mehrzahl von Öffnungen. Die Öffnungen sind zumindest entlang einer Umfangsrichtung verteilt angeordnet, insbesondere über die gesamte Umfangsfläche entlang der Umfangsrichtung.

Alternativ oder zusätzlich sind die Öffnungen entlang der axialen Richtung verteilt angeordnet.

Insbesondere sind die Öffnungen zumindest teilweise voneinander unterschiedlich ausgeführt. Die Öffnungen können z. B. als Schlitze oder Kreise bzw. Ellipsen ausgeführt sein.

Insbesondere ist die mindestens eine Öffnung ausschließlich in einem Teilbereich der Umfangsfläche angeordnet, der sich entlang einer Umfangsrichtung über einen Winkelbereich von weniger als 270 Winkelgrad, insbesondere von weniger als 180 Winkelgrad, erstreckt. Damit kann die Folie z. B. in Schritt c) an der Umfangsfläche angeordnet werden, wobei die Folie die mindestens eine Öffnung überdeckt. Damit kann das Ansaugen der Folie verbessert werden, da alle oder zumindest ein Großteil der Öffnungen durch die Folie abgedeckt sind. Ist z. B. die gesamte Umfangsfläche entlang der Umfangsrichtung perforiert, kann der Unterdruck über die nicht von der Folie abgedeckten Öffnungen ggf. abgebaut werden, so dass eine ausreichende Ansaugung ggf. nicht gewährleistet ist.

Insbesondere umfasst die Wickelhülse an der Umfangsfläche eine Mehrzahl von Öffnungen, die in mindestens einer, sich entlang der axialen Richtung erstreckenden Reihe angeordnet sind. Insbesondere sind die Öffnungen einer Reihe entlang der axialen Richtung fluchtend zueinander angeordnet. Insbesondere sind die Öffnungen einer Reihe entlang der axialen Richtung (nicht fluchtend, sondern entlang der Umfangsrichtung) versetzt zueinander angeordnet.

Insbesondere wird eine Größe der mindestens einen Öffnung und der Unterdruck an der mindestens einen Öffnung auf eine Verformungsfestigkeit der Folie abgestimmt, so dass zumindest eine plastische Verformung der Folie durch das Ansaugen der Folie über die mindestens eine Öffnung vermieden wird.

Insbesondere wird beim Aufwickeln der Folie auf die Wickelhülse die Fixierung der Folie an der Umfangsfläche klebemittelfrei, also ohne Klebemittel, durchgeführt.

Insbesondere wird beim Abwickeln der Folie die Folie in einem kontinuierlichen Prozess vollständig von der Wickelhülse abgewickelt, wobei die Wickelhülse unmittelbar nach dem Abwickeln klebemittelfrei ist. Insbesondere erfolgt also kein Trennschritt, bei dem das an der Umfangsfläche unmittelbar angeordnete erste Ende von dem Rest der Folie abgetrennt wird. Insbesondere wird also die gesamte Folie, bis hin zum ersten Ende, von der Wickelhülse abgewickelt, ohne dass die Folie zwischen dem ersten Ende und dem zweiten Ende zwischendurch getrennt wird.

Insbesondere erfolgt das Abwickeln der Folie von einer ersten Wickelhülse und das Aufwickeln der Folie auf eine zweite Wickelhülse und die Folie wird dazwischen bearbeitet, z. B. beschnitten oder beschichtet oder getrocknet oder kalandriert. Insbesondere wird die Folie mit dem ersten Ende, dass die Umfangsfläche der ersten Wickelhülse unmittelbar kontaktiert, von der ersten Wickelhülse abwickelt und mit dem ersten Ende auf der zweiten Wickelhülse aufgewickelt. Es erfolgt also insbesondere kein Trennschritt, bei dem das an der Umfangsfläche der ersten Wickelhülse unmittelbar angeordnete erste Ende von dem Rest der Folie abgetrennt wird. Insbesondere wird also die gesamte Folie, bis hin zum ersten Ende, von der ersten Wickelhülse abgewickelt und bevorzugt auch auf die zweite Wickelhülse aufgewickelt. Die Folie wird also zwischen dem ersten Ende und dem zweiten Ende nicht getrennt.

Es wird weiter ein Coil, zumindest umfassend eine Wickelhülse und eine auf der Wickelhülse aufgewickelte Folie vorgeschlagen. Die Folie umfasst ein Trägermaterial einer Elektrodenfolie, eine zumindest ein Aktivmaterial aufweisende Elektrodenfolie oder eine Separatorfolie, die jeweils als Bestandteile einer Batteriezelle verwendbar sind bzw. verwendet werden. Die Wickelhülse weist eine die aufgewickelte Folie kontaktierende perforierte Umfangsfläche mit mindestens einer Öffnung auf.

Das Coil bzw. die Wickelhülse und/ oder die Folie wir/ werden insbesondere in dem beschriebenen Verfahren verwendet. Die Wickelhülse dient zum Aufwickeln einer Folie auf die Wickelhülse zur Ausbildung des Coils und zum Abwickeln der Folie von der Wickelhülse bzw. dem Coil.

Die Wickelhülse weist insbesondere eine sich entlang einer axialen Richtung erstreckende Drehachse auf.

Insbesondere umfasst die Umfangsfläche eine Mehrzahl von Öffnungen. Die Öffnungen sind zumindest entlang einer Umfangsrichtung verteilt angeordnet, insbesondere über die gesamte Umfangsfläche entlang der Umfangsrichtung.

Alternativ oder zusätzlich sind die Öffnungen entlang der axialen Richtung verteilt angeordnet.

Insbesondere sind die Öffnungen zumindest teilweise voneinander unterschiedlich ausgeführt. Die Öffnungen können z. B. als Schlitze oder Kreise bzw. Ellipsen ausgeführt sein.

Insbesondere ist die mindestens eine Öffnung ausschließlich in einem Teilbereich der Umfangsfläche angeordnet, der sich entlang einer Umfangsrichtung über einen Winkelbereich von weniger als 270 Winkelgrad, insbesondere von weniger als 180 Winkelgrad, erstreckt. Damit kann die Folie z. B. in Schritt c) an der Umfangsfläche angeordnet werden, wobei die Folie die mindestens eine Öffnung überdeckt. Damit kann das Ansaugen der Folie verbessert werden, da alle oder zumindest ein Großteil der Öffnungen durch die Folie abgedeckt sind. Ist z. B. die gesamte Umfangsfläche entlang der Umfangsrichtung perforiert, kann der Unterdruck über die nicht von der Folie abgedeckten Öffnungen ggf. abgebaut werden, so dass eine ausreichende Ansaugung ggf. nicht gewährleistet ist.

Insbesondere umfasst die Wickelhülse an der Umfangsfläche eine Mehrzahl von Öffnungen, die in mindestens einer, sich entlang der axialen Richtung erstreckenden Reihe angeordnet sind. Insbesondere sind die Öffnungen einer Reihe entlang der axialen Richtung fluchtend zueinander angeordnet.

Insbesondere wird eine Größe der mindestens einen Öffnung und der Unterdruck an der mindestens einen Öffnung auf eine Verformungsfestigkeit der Folie abgestimmt, so dass zumindest eine plastische Verformung der Folie durch das Ansaugen der Folie über die mindestens eine Öffnung vermieden wird.

Es wird weiter eine Vorrichtung vorgeschlagen, zumindest umfassend eine Welle, eine auf der Welle anordenbare Wickelhülse und eine Unterdruckquelle. Die Unterdruckquelle kann z. B. über eine geeignete Verbindung bzw. Kopplung mit der Welle und/ oder mit der Wickelhülse verbunden werden. Die Vorrichtung ist insbesondere zur Durchführung des Verfahrens geeignet ausgeführt.

Das Verfahren ist insbesondere durch ein System zur Datenverarbeitung, z. B. ein Steuergerät, durchführbar, wobei das System Mittel aufweist, die zur Ausführung der Schritte des Verfahrens geeignet ausgestattet, konfiguriert oder programmiert sind bzw. die das Verfahren ausführen. Mit dem System kann zumindest
- das Zuführen der Folie zu der Wickelhülse;
- das Anlegen der Folie an die Wickelhülse;
- die Regelung des Unterdrucks;
- die Regelung der Drehung der Welle bzw. der Wickelhülse;
- der Vorschub der Folie
erfolgen.

Die Vorrichtung umfasst insbesondere das System zur Datenverarbeitung.

Die Mittel des Systems umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Es wird weiter eine Batteriezelle vorgeschlagen, zumindest umfassend ein Gehäuse und darin angeordnet einen Stapel von Elektrodenfolien, die insbesondere durch das beschriebene Verfahren und/ oder mit der beschriebenen Wickelhülse hergestellt sind.

Es wird weiter ein Kraftfahrzeug vorgeschlagen, zumindest umfassend einen Traktionsantrieb und eine Batterie mit mindestens einer der beschriebenen Batteriezellen, wobei der Traktionsantrieb durch die mindestens eine Batteriezelle mit Energie versorgbar ist.

Die Ausführungen zu dem Verfahren sind insbesondere auf das Coil, die Vorrichtung, die Batteriezelle, das Kraftfahrzeug, das System zur Datenverarbeitung sowie auf das computerimplementierte Verfahren (also den Computer bzw. den Prozessor, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Vorrichtung mit einer ersten Wickelhülse und einer zweiten Wickelhülse;
- Fig. 2:: eine Wickelhülse in einer perspektivischen Ansicht; und
- Fig. 3:: einen Ausschnitt der Vorrichtung nach Fig. 1.

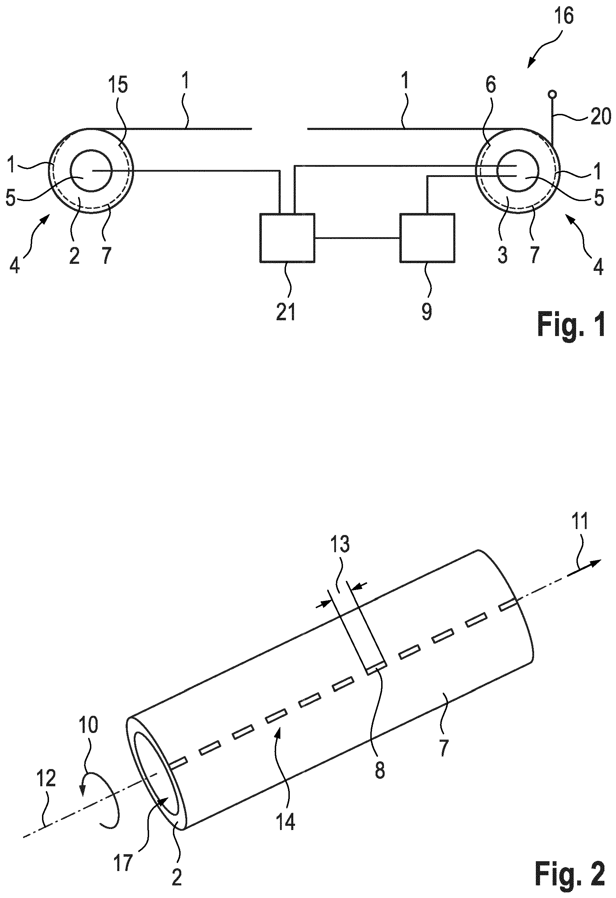

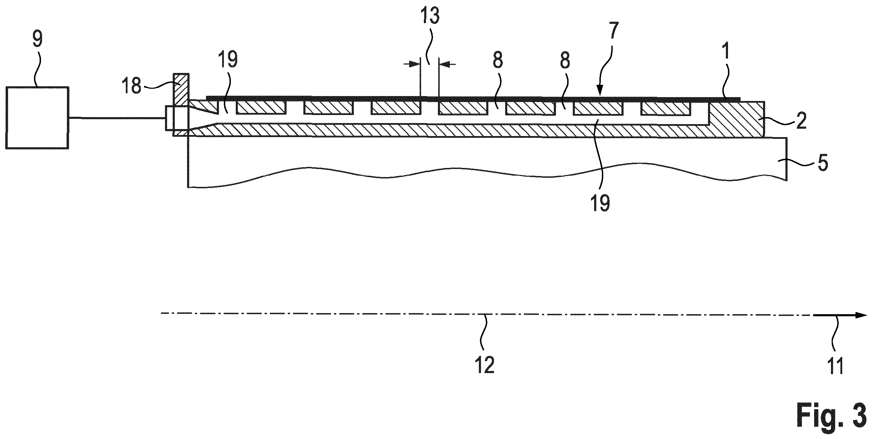

Die Fig. 1 zeigt eine Vorrichtung 16 mit einer ersten Wickelhülse 2 und einer zweiten Wickelhülse 3. Fig. 2 zeigt eine Wickelhülse 2, 3 in einer perspektivischen Ansicht. Fig. 3 zeigt einen Ausschnitt der Vorrichtung 16 nach Fig. 1. Die Fig. 1 bis 3 werden im Folgenden gemeinsam beschrieben.

Die Vorrichtung 16 umfasst zwei Wickelhülsen 2, 3, die jeweils auf einer Welle 5 angeordnet sind sowie für jede Wickelhülse 2, 3 eine Unterdruckquelle 9. Die Unterdruckquelle 9 ist über eine geeignete Verbindung bzw. Kopplung mit der Wickelhülse 2, 3 verbunden (siehe Fig. 3). Weiter ist ein Steuergerät 21 zur Regelung der Vorrichtung 16 vorgesehen.

Die zweite Wickelhülse 3 dient zum Aufwickeln der Folie 1 und zur Ausbildung eines Coils 4 zusammen mit der zweiten Wickelhülse 3. Die erste Wickelhülse 2 dient zum Abwickeln der Folie 1 von der ersten Wickelhülse 2. Die Folie 1 umfasst ein Trägermaterial einer Elektrodenfolie, eine zumindest ein Aktivmaterial aufweisende Elektrodenfolie oder eine Separatorfolie, die als Bestandteile einer Batteriezelle verwendet werden. Die Wickelhülsen 2, 3 weisen jeweils eine die aufgewickelte Folie 1 kontaktierende perforierte Umfangsfläche 7 mit jeweils einer Mehrzahl von Öffnungen 8 auf.

Jede Wickelhülse 2, 3 weist eine sich entlang einer axialen Richtung 11 erstreckende Drehachse 12 auf. Die Umfangsfläche 7 weist eine Mehrzahl von Öffnungen 8 auf. Die Öffnungen 8 können entlang einer Umfangsrichtung 10 verteilt angeordnet sein, insbesondere über die gesamte Umfangsfläche 7 entlang der Umfangsrichtung 10 (nicht dargestellt).

Die Öffnungen 8 sind in Fig. 2 und 3 entlang der axialen Richtung 11 verteilt angeordnet.

Die Öffnungen 8 sind in Fig. 2 und 3 jeweils als Schlitze ausgeführt.

In Fig. 2 ist dargestellt, dass die Öffnungen 8 ausschließlich in einem Teilbereich 17 der Umfangsfläche 7 angeordnet sind, der sich entlang einer Umfangsrichtung 10 über einen Winkelbereich von ca. 10 Winkelgrad erstreckt. Damit kann die 1 Folie z. B. in Schritt c) an der Umfangsfläche 7 angeordnet werden, wobei die Folie 1 die Öffnungen 8 überdeckt. Damit kann das Ansaugen der Folie 1 verbessert werden, da alle oder zumindest ein Großteil der Öffnungen 8 durch die Folie 1 abgedeckt sind. Ist z. B. die gesamte Umfangsfläche 7 entlang der Umfangsrichtung 10 perforiert, kann der Unterdruck über die nicht von der Folie 1 abgedeckten Öffnungen 8 ggf. abgebaut werden, so dass eine ausreichende Ansaugung ggf. nicht gewährleistet ist.

Gemäß Fig. 2 weist die Wickelhülse 2, 3 an der Umfangsfläche 7 eine Mehrzahl von Öffnungen 8 auf, die in einer, sich entlang der axialen Richtung 11 erstreckenden Reihe 14 angeordnet sind. Die Öffnungen 8 der Reihe 14 sind entlang der axialen Richtung 11 fluchtend zueinander angeordnet.

Eine Größe 13 der jeweiligen Öffnung 8 und der Unterdruck an der jeweiligen Öffnung 8 ist auf eine Verformungsfestigkeit der Folie 1 abgestimmt, so dass zumindest eine plastische Verformung der Folie 1 durch das Ansaugen der Folie 1 über die jeweilige Öffnung 8 vermieden wird.

Das beschriebene Verfahren ist auf das Aufwickeln (auf die zweite Wickelhülse 3 gemäß Fig. 1) und Abwickeln (von der ersten Wickelhülse 2 gemäß Fig. 1) der Folie gerichtet, wobei die auf der Wickelhülse 2, 3 aufgewickelte Folie 1 zusammen mit der Wickelhülse 2, 3 als Coil 4 bezeichnet wird.

Die Wickelhülse 2, 3 weist eine perforierte Umfangsfläche 7 mit Öffnungen 8 auf. Die Umfangsfläche 7 ist hohlzylindrisch ausgeführt. Die Wickelhülse 2, 3 ist zur Anordnung auf einer Welle 5 geeignet ausgeführt, weist also zur Verbindung mit der Welle 5 geeignete Anschlussmaße bzw. Anschlussgeometrien auf. Die Welle 5 dient der Anordnung (erste Wickelhülse 2) oder zusätzlich dem Antrieb, also der Drehung der Wickelhülse (zweite Wickelhülse 3). Infolge der Anordnung auf der Welle 5 kann die Folie 1 auf die zweite Wickelhülse 3 aufgewickelt und von der ersten Wickelhülse 2 abgewickelt werden.

Die Welle ist mit einer geschlossenen Umfangsfläche 7 ausgeführt. Die Wickelhülse 2, 3 weist einen stirnseitigen Anschluss 18 für die Unterdruckquelle 9 auf, wobei die Umfangsfläche 7 von der Welle 5 beabstandet angeordnet ist, so dass über den (zylindrischen) Spalt 19 zwischen Umfangsfläche 7 und Welle 5 der Unterdruck der Unterdruckquelle 9 an den Öffnungen 8 bereitgestellt werden kann (siehe Fig. 3). In Fig. 3 ist der Spalt 19 innerhalb des Materials der Wickelhülse 2, 3 ausgebildet.

Der Unterdruck dient dazu, die Folie 1 an der Umfangsfläche 7 zu fixieren. Fixieren heißt, dass eine Ansaugkraft bereitgestellt wird, durch die die Folie 1 an die Umfangsfläche 7 angesaugt wird.

Die Folie 1 umfasst keine klebenden Bestandteile, durch die die Folie 1 an der Umfangsfläche 7 der Wickelhülse 2, 3 anhaften könnte.

Gemäß Schritt a) erfolgt ein Bereitstellen der Wickelhülse 2, 3 und ein Anordnen der Wickelhülse 2, 3 auf einer Welle 5.

Gemäß Schritt b) erfolgt ein Bereitstellen der Folie 1 als Endlosmaterial, wobei die Folie 1 ein erstes Ende 6 aufweist. Das erste Ende 6 wird an der Umfangsfläche 7 angeordnet, dort über den Unterdruck fixiert und dann die Folie 1 aufgewickelt (siehe Fig. 1 mit dem ersten Ende 6 an der zweiten Wickelhülse 3). Die Folie 1 erstreckt sich über mindestens eine bis mehrere Lagen der Folie 1, bis hin zu einem zweiten Ende 15 der Folie 1, das in Fig. 1 die Umfangsfläche 7 der ersten Wickelhülse 2 kontaktiert.

Gemäß Schritt c) erfolgt ein Anordnen des ersten Endes 6 auf der zweiten Wickelhülse 3. Das Anordnen kann z. B. durch eine Zuführung 20 erfolgen, durch die Folie 1 hin zur zweiten Wickelhülse 3 geleitet wird. Dabei legt sich die Folie 1 über das erste Ende 6 an der Umfangfläche 7 an und wird über die Öffnungen 8 an der Umfangsfläche 7 angesaugt. Während des Anordnens kann die Wickelhülse 2, 3 still stehen oder sich drehen. Die Folie 1 kann an der Umfangsfläche 7 angelegt werden oder kontinuierlich hin zur Wickelhülse 2, 3 zugeführt werden. Das Anordnen umfasst insbesondere auch das Aufwickeln der Folie 1, zumindest so weit, dass die Folie 1 entlang der Umfangsrichtung 10 über einen Winkelbereich von null bis 360, insbesondere von mindestens 15 Winkelgrad und höchstens 345 Winkelgrad an der Umfangsfläche 7 anliegt.

Insbesondere liegt während Schritt c), zumindest teilweise/ ggf. vollzeitig während Schritt c), der Unterdruck an den Öffnungen 8 an, so dass die Folie 1 über den Unterdruck an der Umfangfläche 7 zum Anliegen gebracht und dort fixiert wird.

Gemäß Schritt d) erfolgt insbesondere ein Aufwickeln der Folie 1 auf der zweiten Wickelhülse 3 und ein Ausbilden des Coils 4.

Beim Abwickeln der Folie 1 wird die Folie 1 in einem kontinuierlichen Prozess vollständig von der ersten Wickelhülse 2 abgewickelt, wobei die erste Wickelhülse 2 unmittelbar nach dem Abwickeln klebemittelfrei ist. Es erfolgt also kein Trennschritt, bei dem das an der Umfangsfläche 7 der ersten Wickelhülse 2 unmittelbar angeordnete zweite Ende 15 von dem Rest der Folie 1 abgetrennt wird. Es wird also die gesamte Folie 1, bis hin zum zweiten Ende 15, von der ersten Wickelhülse 2 abgewickelt, ohne dass die Folie 1 zwischen dem ersten Ende 6 und dem zweiten Ende 15 zwischendurch getrennt wird.

Gemäß Fig. 1 erfolgt das Abwickeln der Folie 1 von der ersten Wickelhülse 2 und das Aufwickeln der Folie 1 auf die zweite Wickelhülse 3 und die Folie 1 wird dazwischen bearbeitet, z. B. beschnitten oder beschichtet oder getrocknet oder kalandriert (nur angedeutet). Die Folie 1 weist ein erstes Ende 6 auf, dass die Umfangsfläche 7 der zweiten Wickelhülse 3 unmittelbar kontaktiert. Das andere, zweite Ende 15 der Folie 1 kontaktiert die Umfangsfläche 7 der ersten Wickelhülse 2 unmittelbar. Die Folie 1 wird mit dem zweiten Ende 15, dass die Umfangsfläche 7 der ersten Wickelhülse 2 unmittelbar kontaktiert, von der ersten Wickelhülse 2 abwickelt und mit dem zweiten Ende 15 auf der zweiten Wickelhülse 3 aufgewickelt. Es erfolgt also kein Trennschritt, bei dem das an der Umfangsfläche 7 der ersten Wickelhülse 2 unmittelbar angeordnete zweite Ende 15 von dem Rest der Folie 1 abgetrennt wird. Es wird also die gesamte Folie 1, ausgehend von dem in Fig. 1 die zweite Wickelhülse 3 bereits unmittelbar kontaktierende erste Ende 6, bis hin zum zweiten Ende 15, von der ersten Wickelhülse 2 abgewickelt und auf die zweite Wickelhülse 3 aufgewickelt. Die Folie 1 wird also zwischen dem ersten Ende 5 und dem zweiten Ende 15 nicht getrennt.

### Bezugszeichenliste

- 1: Folie
- 2: erste Wickelhülse
- 3: zweite Wickelhülse
- 4: Coil
- 5: Welle
- 6: erstes Ende
- 7: Umfangsfläche
- 8: Öffnung
- 9: Unterdruckquelle
- 10: Umfangsrichtung
- 11: axiale Richtung
- 12: Drehachse
- 13: Größe
- 14: Reihe
- 15: zweites Ende
- 16: Vorrichtung
- 17: Teilbereich
- 18: Anschluss
- 19: Spalt
- 20: Zuführung
- 21: Steuergerät

## Patentansprüche

1. Verfahren zum Aufwickeln einer Folie (1) auf eine Wickelhülse (2, 3) zur Ausbildung eines Coils (4) und zum Abwickeln der Folie (1) von der Wickelhülse (2, 3); wobei die Folie (1) ein Trägermaterial einer Elektrodenfolie, eine zumindest ein Aktivmaterial aufweisende Elektrodenfolie oder eine Separatorfolie umfasst, die als Bestandteile einer Batteriezelle verwendet werden, wobei das Verfahren beim Aufwickeln zumindest die folgenden Schritte umfasst:
a) Bereitstellen der Wickelhülse (2, 3) und Anordnen der Wickelhülse (2, 3) auf einer Welle (5);
b) Bereitstellen der Folie (1) als Endlosmaterial, wobei die Folie (1) ein erstes Ende (6) aufweist;
c) Anordnen des ersten Endes (6) auf der Wickelhülse (2, 3);
d) Aufwickeln der Folie (1) auf der Wickelhülse (2, 3) und Ausbilden des Coils (4);
**dadurch gekennzeichnet, dass** die Wickelhülse (2, 3) eine perforierte Umfangsfläche (7) mit mindestens einer Öffnung (8) aufweist, auf der die Folie (1) in den Schritten c) und d) angeordnet wird, wobei die Wickelhülse (2, 3) an eine Unterdruckquelle (9) angeschlossen ist, über die an der mindestens einen Öffnung (8) ein Unterdruck erzeugt wird, so dass durch den Unterdruck die Folie (1) an der Umfangsfläche (7) zumindest während Schritt c) fixiert wird.

2. Verfahren nach Patentanspruch 1, wobei die Umfangsfläche (7) eine Mehrzahl von Öffnungen (8) umfasst; wobei die Öffnungen (8) zumindest entlang einer Umfangsrichtung (10) verteilt angeordnet sind oder die Wickelhülse (2, 3) eine sich entlang einer axialen Richtung (11) erstreckende Drehachse (12) aufweist und die Öffnungen (8) entlang der axialen Richtung (11) verteilt angeordnet sind.

3. Verfahren nach Patentanspruch 2, wobei die Öffnungen (8) zumindest teilweise voneinander unterschiedlich ausgeführt sind.

4. Verfahren nach einem der vorhergehenden Patentansprüche, wobei eine Größe (13) der mindestens einen Öffnung (8) und der Unterdruck an der mindestens einen Öffnung (8) auf eine Verformungsfestigkeit der Folie (1) abgestimmt wird, so dass zumindest eine plastische Verformung der Folie (1) durch das Ansaugen der Folie (1) über die mindestens eine Öffnung (8) vermieden wird.

5. Verfahren nach einem der vorhergehenden Patentansprüche, wobei beim Aufwickeln die Fixierung der Folie (1) an der Umfangsfläche (7) klebemittelfrei durchgeführt wird.

6. Verfahren nach einem der vorhergehenden Patentansprüche, wobei beim Abwickeln die Folie (1) in einem kontinuierlichen Prozess vollständig von der Wickelhülse (2, 3) abgewickelt wird, wobei die Wickelhülse (2, 3) unmittelbar nach dem Abwickeln klebemittelfrei ist.

7. Verfahren nach einem der vorhergehenden Patentansprüche, wobei das Abwickeln der Folie (1) von einer ersten Wickelhülse (2) und das Aufwickeln der Folie (1) auf eine zweite Wickelhülse (3) erfolgt und die Folie (1) dazwischen bearbeitet wird; wobei die Folie (1) mit dem ersten Ende (6) von der ersten Wickelhülse (2) abwickelt und mit dem ersten Ende (6) auf der zweiten Wickelhülse (3) aufgewickelt wird.

8. Coil (4), zumindest umfassend eine Wickelhülse (2, 3) und eine auf der Wickelhülse (2, 3) aufgewickelte Folie (1); wobei die Folie (1) ein Trägermaterial einer Elektrodenfolie, eine zumindest ein Aktivmaterial aufweisende Elektrodenfolie oder eine Separatorfolie umfasst, die als Bestandteile einer Batteriezelle verwendbar sind, wobei die Wickelhülse (2, 3) eine die aufgewickelte Folie (1) kontaktierende perforierte Umfangsfläche (7) mit mindestens einer Öffnung (8) aufweist.

9. Coil (4) nach Patentanspruch 8, wobei die Umfangsfläche (7) eine Mehrzahl von Öffnungen (8) umfasst; wobei die Öffnungen (8) zumindest entlang einer Umfangsrichtung (10) verteilt angeordnet sind oder die Wickelhülse (2, 3) eine sich entlang einer axialen Richtung (11) erstreckende Drehachse (12) aufweist und die Öffnungen (8) entlang der axialen Richtung (11) verteilt angeordnet sind.

10. Coil (4) nach Patentanspruch 9, wobei die Öffnungen (8) zumindest teilweise voneinander unterschiedlich ausgeführt sind.

## Claims

1. Method for winding a foil (1) onto a winding core (2, 3) to form a coil (4) and for unwinding the foil (1) from the winding core (2, 3); wherein the foil (1) comprises a substrate of an electrode foil, an electrode foil having at least one active material or a separator foil, which are used as components of a battery cell, wherein, when winding, the method comprises the following steps:
a) providing the winding core (2, 3) and arranging the winding core (2, 3) on a shaft (5);
b) providing the foil (1) as a continuous material, wherein the foil (1) has a first end (6);
c) arranging the first end (6) on the winding core (2, 3);
d) winding the foil (1) on the winding core (2, 3) and forming the coil (4);
**characterized in that** the winding core (2, 3) has a perforated circumferential surface (7) with at least one opening (8) on which the foil (1) is arranged in steps c) and d), wherein the winding core (2, 3) is connected to a vacuum source (9) via which a vacuum is generated at the at least one opening (8) so that the foil (1) is fixed on the circumferential surface (7) by the vacuum at least during step c).

2. Method according to Claim 1, wherein the circumferential surface (7) comprises a plurality of openings (8); wherein the openings (8) are arranged in a distributed manner at least along a circumferential direction (10) or the winding core (2, 3) has an axis of rotation (12) extending along an axial direction (11) and the openings (8) are arranged in a distributed manner along the axial direction (11).

3. Method according to Claim 2, wherein the openings (8) are made at least partially different from one another.

4. Method according to one of the preceding claims, wherein a size (13) of the at least one opening (8) and the vacuum at the at least one opening (8) are made to match a deformation resistance of the foil (1) so as to avoid at least a plastic deformation of the foil (1) by the suction applied to the foil (1) through the at least one opening (8).

5. Method according to one of the preceding claims, wherein, when winding, the fixing of the foil (1) on the circumferential surface (7) is carried out without any adhesive.

6. Method according to one of the preceding claims, wherein, when unwinding, the foil (1) is completely unwound from the winding core (2, 3) in a continuous process, wherein the winding core (2, 3) is adhesive-free right after unwinding.

7. Method according to one of the preceding claims, wherein the unwinding of the foil (1) takes place from a first winding core (2) and the winding of the foil (1) takes place onto a second winding core (3) and the foil (1) is processed in between; wherein the foil (1) is unwound from the first winding core (2) with the first end (6) and is wound on the second winding core (3) with the first end (6).

8. Coil (4), at least comprising a winding core (2, 3) and a foil (1) wound on the winding core (2, 3); wherein the foil (1) comprises a substrate of an electrode foil, an electrode foil having at least one active material or a separator foil, which can be used as components of a battery cell, wherein the winding core (2, 3) has a perforated circumferential surface (7) with at least one opening (8) that contacts the coiled foil (1).

9. Coil (4) according to Claim 8, wherein the circumferential surface (7) comprises a plurality of openings (8); wherein the openings (8) are arranged in a distributed manner at least along a circumferential direction (10) or the winding core (2, 3) has an axis of rotation (12) extending along an axial direction (11) and the openings (8) are arranged in a distributed manner along the axial direction (11).

10. Coil (4) according to Claim 9, wherein the openings (8) are made at least partially different from one another.

## Revendications

1. Procédé d'enroulement d'une feuille (1) sur un mandrin (2, 3) pour former une bobine (4) et pour dérouler la feuille (1) du mandrin (2, 3) ; la feuille (1) comprenant un matériau de support d'une feuille d'électrode, une feuille d'électrode comportant au moins un matériau actif ou une feuille de séparateur, qui sont utilisés en tant qu'éléments constitutifs d'un élément de batterie, le procédé comprenant lors de l'enroulement au moins les étapes suivantes :
a) fourniture du mandrin (2, 3) et disposition du mandrin (2, 3) sur un arbre (5) ;
b) fourniture de la feuille (1) en tant que matériau sans fin, la feuille (1) comportant une première extrémité (6) ;
c) disposition de la première extrémité (6) sur le mandrin (2, 3) ;
d) enroulement de la feuille (1) sur le mandrin (2, 3) et formation de la bobine (4) ;
**caractérisé en ce que** le mandrin (2, 3) comporte une surface périphérique (7) perforée avec au moins une ouverture (8), sur laquelle la feuille (1) est disposée dans les étapes c) et d), le mandrin (2, 3) étant raccordé à une source de dépression (9), par laquelle une dépression est générée sur l'au moins une ouverture (8) de telle sorte que la feuille (1) est fixée sur la surface périphérique (7) au moins pendant l'étape c) par la dépression.

2. Procédé selon la revendication 1, la surface périphérique (7) comprenant une multitude d'ouvertures (8) ; les ouvertures (8) étant disposées de manière répartie au moins le long d'une direction périphérique (10) ou le mandrin (2, 3) comportant un axe de rotation (12) s'étendant le long d'une direction axiale (11) et les ouvertures (8) étant disposées de manière répartie le long de la direction axiale (11).

3. Procédé selon la revendication 2, les ouvertures (8) étant réalisées au moins en partie différemment les unes des autres.

4. Procédé selon l'une des revendications précédentes, une taille (13) de l'au moins une ouverture (8) et la dépression sur l'au moins une ouverture (8) étant adaptées à une résistance à la déformation de la feuille (1) de telle sorte qu'au moins une déformation plastique de la feuille (1) est évitée par l'aspiration de la feuille (1) par l'au moins une ouverture (8).

5. Procédé selon l'une des revendications précédentes, la fixation de la feuille (1) sur la surface périphérique (7) étant effectuée sans colle lors de l'enroulement.

6. Procédé selon l'une des revendications précédentes, la feuille (1) étant totalement déroulée du mandrin (2, 3) dans un processus continu lors du déroulement, le mandrin (2, 3) étant sans colle directement après le déroulement.

7. Procédé selon l'une des revendications précédentes, le déroulement de la feuille (1) d'un premier mandrin (2) et l'enroulement de la feuille (1) sur un deuxième mandrin (3) étant effectués et la feuille (1) étant usinée entre-temps ; la feuille (1) étant déroulée du premier mandrin (2) par la première extrémité (6) et étant enroulée sur le deuxième mandrin (3) par la première extrémité (6).

8. Bobine (4), comprenant au moins un mandrin (2, 3) et une feuille (1) enroulée sur le mandrin (2, 3) ; la feuille (1) comprenant un matériau de support d'une feuille d'électrode, une feuille d'électrode comportant au moins un matériau actif ou une feuille de séparateur, qui peuvent être utilisés en tant qu'éléments constitutifs d'un élément de batterie, le mandrin (2, 3) comportant une surface périphérique (7) perforée venant en contact avec la feuille (1) enroulée avec au moins une ouverture (8).

9. Bobine (4) selon la revendication 8, la surface périphérique (7) comprenant une multitude d'ouvertures (8) ; les ouvertures (8) étant disposées de manière répartie au moins le long d'une direction périphérique (10) ou le mandrin (2, 3) comportant un axe de rotation (12) s'étendant le long d'une direction axiale (11) et les ouvertures (8) étant disposées de manière répartie le long de la direction axiale (11).

10. Bobine (4) selon la revendication 9, les ouvertures (8) étant réalisées au moins en partie différemment les unes des autres.
